# EUROPEAN PATENT SPECIFICATION

(11) **EP 2 015 231 B1**
(45) Date of publication and mention of the grant of the patent: **06.06.2012**
(21) Application number: 08017361.0
(22) Date of filing: 02.07.2003
(51) Int. Cl.: G06K 19/07, G06K 7/00

(54) **Reader interfacing device**
Leserschnittstellenvorrichtung
Dispositif d'interface de lecteur

(30) Priority: 03.07.2002 GB 0215318
(43) Date of publication of application: 14.01.2009
(62) Divisional of application: 03738305.6
(73) Proprietor: Mineral Lassen LLC, Las Vegas, NV 89119 (US)
(72) Inventor: Forster, Ian, James, Chelmsford Essex CM1 5LA (GB)
(74) Representative: Kazi, Ilya

(56) References cited:
- EP-A- 0 347 894
- EP-A- 0 724 336
- EP-A- 1 209 615
- WO-A-01/31600
- US-A- 5 485 154
- OBRIST B ET AL: "A microwave powered data transponder" SENSORS AND ACTUATORS A, ELSEVIER SEQUOIA S.A., LAUSANNE, CH, vol. 46, no. 1-3, January 1995 (1995-01), pages 244-246, XP004303489 ISSN: 0924-4247

## Description

The present invention relates to a reader interfacing device for providing a communication path between a conventional reader operable at a first radiation frequency, for example in the order of 13.56 MHz, and a smart label or tag operable at a second radiation frequency, for example in the order of 2.45 GHz.

Conventional smart labels and tags are becoming increasingly used in a number of applications, for example in vehicle key fobs including tags for use in remote locking and unlocking of associated vehicles, smart labels attached to merchandise in retailing premises for use in counteracting merchandise theft, and personal identity cards comprising smart labels or tags for gaining authorised access to restricted premises. In practice, smart labels are often designed to be permanently attachable to items to mark them whereas tags tend to be used in portable items which can be personnel wearable.

A standard ISO 15693 is currently being established by a consortium of major international companies for smart labels and tags, the standard having the purpose of increasing the market for mutually compatible smart label and tag systems. The standard may lead in future to a significant deployed infrastructure of smart label-and tag readers. Moreover, the standard is establishing a universal frequency of 13.56 MHz for radiation to be used to communicate to and from such tags and smart labels. Readers operating at 13.56 MHz will be capable of providing power and communicating with associated tags and smart labels at ranges of up to 2 metres therefrom. The readers will interrogate the tags or smart labels using amplitude modulated interrogating radiation and the tags or smart labels will communicate back to the readers by utilising load modulation at sub-carrier frequencies specified in the standard, namely the readers will detect an amount of power being absorbed by the tags or labels around the frequency of the interrogating radiation.

The inventors have appreciated that, in some applications, it is desirable for tags and smart labels to operate at other radiation frequencies than 13.56 MHz specified in the aforementioned standard, for example at a higher frequency in the order of 2.45 GHz, namely at least an order of magnitude greater than 13.56 MHz. Benefits of operating at such a higher frequency include:
(a) selective directional smart label or tag reading;
(b) radiation propagation from readers to smart labels or tags which is more electromagnetic in nature compared to the aforementioned conventional readers operating at 13.56 MHz which rely principally on magnetic coupling; moreover, losses can be reduced in some circumstances when operating at higher frequencies, for example in the order of 2.45 GHz; and
(c) optional mounting of smart labels on metallic surfaces from which the labels are electrically isolated is feasible at higher frequencies, for example in the order of 2.45 GHz.

The inventors have appreciated that operation at a radiation frequency at least an order of magnitude lower than 13.56 MHz provides enhanced radiation propagation through objects, for example in articles whose smart labels or tags are concealed from view therein.

A number of conventional longer range tagging systems are commercially available. However, they do not conform to the aforementioned standard and so cannot be interoperated with readers conforming to the standard. For applications where infrastructure operating at a radiation frequency of 13.56 MHz and adhering to the standard has already been installed, the cost of installing a parallel reader and associated smart label system operating at other interrogating radiation frequencies will often be prohibitive and, if the infrastructure is modified (DE-A-199 08 879) to operate at another interrogation frequency, then it will no longer comply with the original standard.

WO-A-01/31600 describes a system for identifying a personal item that is fitted with an identification tag having an assigned individual code. A portable detecting device enables the tag to transmit a signal representing the code which may be used as an email address on a dedicated web site.

EP-A2-0724336 describes a mobile satellite communication terminal for performing satellite communication outdoors, and indoors via a ground radio link and repeater terminal.

According to a first aspect of the present invention, there is provided a system comprising a reader (20) and either a remote tag (110) or a smart label (110), the tag (110) being used in portable items which can be personnel wearable, or the tag (110) or smart label (110) being comprised by a personal identity card for gaining authorized access to restricted premises, or a the smart a label (110) being designed to be permanently attachable to items to mark them,
the system being characterized by
a reader interfacing device for providing a communication path between:
(a) the reader configured to emit and receive from the reader interfacing device interrogating radiation at a first radiation frequency; and
(b) the remote tag or smart label configured to be interrogated by receiving from and emitting to the reader interfacing device radiation of a second frequency, wherein the first and second frequencies are mutually different by at least an order of magnitude, and the reader is operable to communicate through the device to the remote tag or smart label.

The invention provides the advantage that the interface device is capable of enabling the reader operating at the first frequency to communicate with the tag or smart label operating at the second frequency, such operation providing potential benefits including one or more of selective directional smart label or tag reading, reduced losses in some circumstances and optional mounting of smart labels on metallic surfaces.

In order to benefit noticeably from one or more of the advantages, the first and second frequencies need to be mutually different by at least an order of magnitude.

In order to make the reader convenient to use and install, the device advantageously includes power conversion means for converting interrogating radiation received at the device from the reader to generate power supply potentials for powering the device.

In many tag or smart label reading systems, the reader employs a loop antenna. Thus, to ensure ease of interfacing, the device is preferably mutually magnetically coupled to the reader for receiving the interrogating radiation therefrom and for providing a modulated load thereto for communicating back to the reader. Conveniently, the device includes a first loop antenna for magnetically coupling to a corresponding second loop antenna of the reader.

Conventional tag or smart label readers use load modulation to sense signals emitted back from tags or smart labels. Hence, the device advantageously incorporates a modulated field effect transistor connected to the first loop antenna for providing a variable load detectable at the reader, thereby communicating back from the device to the reader.

In order to achieve advantages described above, it is especially desirable that the second frequency is in a range of 300 MHz to 90 GHz.

Advantageously, in operation, the device is configured to emit radiation to the remote tag or smart label and receive radiation therefrom using patch antennae. Patch antennae are generally physically compact and potentially inexpensive to implement, especially in a frequency range of 300 MHz to 30 GHz. Conveniently, the second frequency is in a range of 2 GHz to 3 GHz. Preferably, the second frequency is 2.44 GHz, namely a harmonic of 13.56 MHz which is a standard frequency for the standard ISO 15693.

In order to interface to different, possibly non-standard, types of tag or smart label, the device preferably includes translating means for converting between a modulation format used by the reader for modulating information onto the interrogating radiation to be received by the device and a modulation format used by the remote tag or smart label for communicating therefrom to and from the device. Advantageously, the translating means includes an amplitude demodulator for demodulating a first received signal generated in the device in response to receiving thereat the interrogating radiation from the reader and thereby generating a first demodulated signal, the translating means further including a modulator supplied with a carrier signal at the second frequency and operable to modulate the carrier signal with the first demodulated signal to generate radiation for interrogating the remote tag or smart label. Moreover, in order to achieve a simpler design for the device, the translating means includes a demodulator for heterodyne mixing a second received signal generated in response to receiving radiation from the remote tag or smart label with the carrier signal to generate a second demodulated signal for use in providing load modulation detectable at the reader. Furthermore, to assist with achieving more stable frequency operation, the carrier signal is advantageously generated by a microwave oscillator frequency locked to the first frequency.

Further described herein is a remote tag or smart label that may be used with the device according to the first aspect of the invention, the remote tag or smart label incorporating amplifying means for reflectively amplifying a received signal generated therein in response to receiving interrogating radiation from the device, wherein the amplified received signal is useable for providing response radiation that is receivable at the device.

Embodiments of the invention will now be described, by way of example, with reference to the following drawings in which:
- Figure 1: is an illustration of a conventional prior art smart label reader conforming to the standard ISO 15693, the reader linked to a host computer and interfacing to a conventional low frequency smart label;
- Figure 2: is an illustration of a reader interfacing device according to the invention configured to interface between the convention card reader in Figure 1 and a high frequency smart label;
- Figure 3: is an illustration of coupling between the reader in Figure 1 and the device shown in Figure 2; and
- Figure 4: is a diagram of circuit components included in the device shown in Figures 2 and 3.

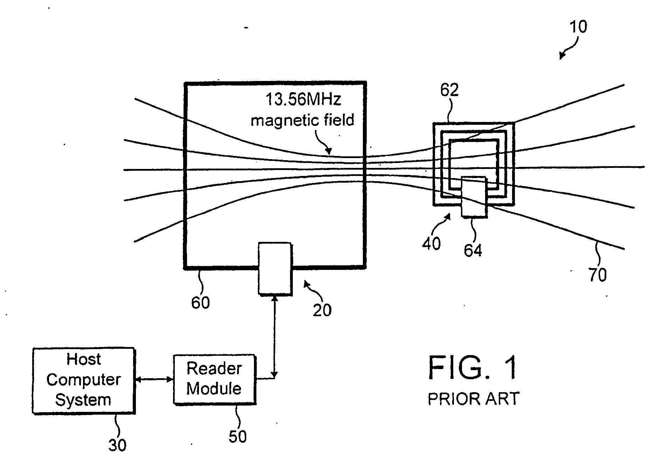

Referring now to Figure 1, there are shown a conventional prior art smart label reader conforming to the standard ISO 15693 linked to a host computer system and interfacing to a smart label. The reader, the computer system and the label are indicated generally by 10, and individually indicated by 20, 30, 40 respectively. The reader 20 further comprises a reader module 50 for interfacing between the computer system 30 and an antenna 60 of the reader 20. The computer system 30 is linked also to other readers (not shown) similar to the reader 20.

The conventional smart label 40 comprises an associated antenna 62 connected to an electronics module 64.

Operation of the reader 20, the label 40 and the computer system 30 will now be described with reference to Figure 1. The computer system 30 commences by interrogating the reader module 50 to determine whether or not it is functional. If the module 50 is functional, the computer system 30 then instructs the module 50 to be receptive to sense smart labels placed within sensing range of the antenna 60. The reader module 50 generates a 13.56 MHz magnetic field by driving the antenna 60 with a corresponding 13.56 MHz signal. The 13.56 MHz magnetic field comprises a number of magnetic field lines as illustrated, for example a field line 70.

When the label 40 is brought within sensing range of the reader 20, the antennae 60, 62 become mutually magnetically coupled, thereby coupling the 13.56 MHz field to the label 40 and generating a received signal in the antenna 62. The module 64 receives the received signal which it rectifies to provide operating power for itself and then proceeds to load modulate the antenna 62 according to data, for example a signature code, generated or stored within the module 64. Such load modulation is detected at the reader module 50 via its antenna 60 which thereby senses the data of the label 40. The module 50 then processes the data to provide a response back to the computer system 30 concerning the label 40. When the label 40 is moved to be outside the sensing range of the reader 20, the module 64 receives insufficient power from its associated antenna 62 to operate and hence the reader 20 then ceases to receive data from the label 40.

The sensing range from the reader 20 to the module 64 is in the order of 2 metres.

The label 40 optionally incorporates a microprocessor and associated memory in its module 64 although simpler hardware circuits are also possible.

The reader 20 and the label 40 conform to the aforementioned standard ISO 15693.

The inventors have appreciated that it is desirable to operate the reader 20 and its associated label 40 at radiation frequencies greater than 13.56 MHz. If the reader 20 is modified to operate at a frequency higher than 13.56 MHz, it will no longer conform to the aforementioned standard. In order to address such a conflict, the inventors have devised a reader interfacing device compatible with the reader 20 and capable of communicating with smart labels operating at frequencies at least an order of magnitude higher than 13.56 MHz, for example in a range of 300 MHz to 90 GHz although 2.45 GHz is a preferred nominal frequency.

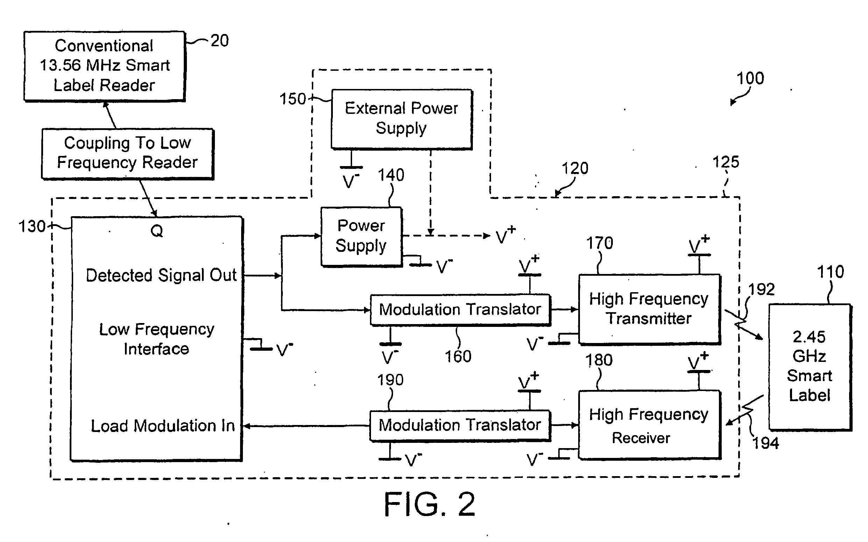

Referring now to Figure 2, there is shown is a schematic illustration of an interface device according the invention configured to interface between the card reader 20 and a high frequency smart label 110; the device, the reader 20 and the smart label 110 are indicated generally by 100. Moreover, the device is indicated by 120 and is included within a dashed line 125.

The interfacing device 120 comprises a low frequency interface 130, a power supply 140, an external power supply 150, a modulation translator 160, a high frequency transmitter 170, a high frequency receiver 180 and a modulation translator 190. The interface 130 is coupled at its port Q to the reader 20; this coupling is achieved using mutually inductively coupled antennae. The interface 130 includes an output "Detected Signal Out" which is connected to an input of the power supply 140 and also to an input of the modulation translator 160. The power supply 140 comprises a negative supply output V- and a positive supply output V+; these V-, V+ outputs are both connected to corresponding power inputs of the translators 160, 190, the transmitter 170 and the receiver 180. The external supply 150 also incorporates corresponding power outputs V-, V+ which are connected in parallel to those of the power supply 140. The translator 160 includes an output which is connected to an input of the transmitter 170. Likewise, the receiver 180 comprises an output which is connected to an input of the translator 190. Moreover, the translator 190 includes an output which is connected to a "Load Modulation In" input of the interface 130.

Operation of the device 120 in combination with the reader 20 and the smart label 110 will now be described with reference to Figure 2. The reader 20 outputs an alternating magnetic field at 13.56 MHz from its associated antenna 60. The magnetic field is received at an antenna associated with the interface 130 to generate a corresponding signal which is received at the port Q of the interface 130. The interface 130 outputs the signal to its "Detected Signal Out" output wherefrom the signal propagates to the power supply 140. The supply 140 rectifies the signal to generate a supply potential difference which is output at the V-, V+ outputs of the supply 140. The supply 140 thereby provides power to operate the translators 160, 190, the transmitter 170 and the receiver 180. If necessary, the supply potential difference generated by the supply 140 is supplementable from the external power supply 150 which can, for example, be connected to a mains electrical supply. The signal also propagates to the translator 160 which translates the format of the signal into a suitable form for the label 110. Thus, the translator 160 outputs a translated signal at its output, the signal propagating to the input of the transmitter 170. The transmitter 170 amplifies the translated signal and then uses the amplified signal to modulate an output signal from a microwave source associated within the transmitter 170 to generate a modulated microwave signal. The modulated signal is then output from the transmitter 170 to a patch antenna (not shown in Figure 2) which radiates the modulated signal as microwave radiation 192 which is subsequently received at the label 110 to generate a received signal therein. The label 110 then processes the received signal and generates a corresponding output signal which the label 110 radiates as microwave radiation 194.

The receiver 180 receives the radiation 194 at its associated patch antenna (not shown in Figure 2) to generate a received amplified signal which propagates from the receiver 180 to the input of the translator 190. The translator 190 translates the amplified received signal into a format suitable for transmission via the low frequency interface 130. The interface 130 receives the translated signal from the translator 190 and uses it to modulate a load applied to its antenna, thereby providing load modulation which is detected by the reader 20, the reader 20 thereby receiving a version of the translated signal from the translator 190.

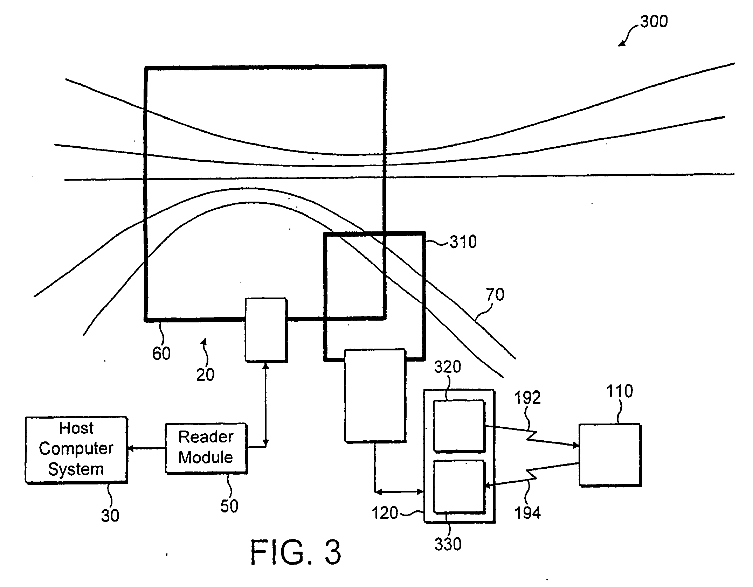

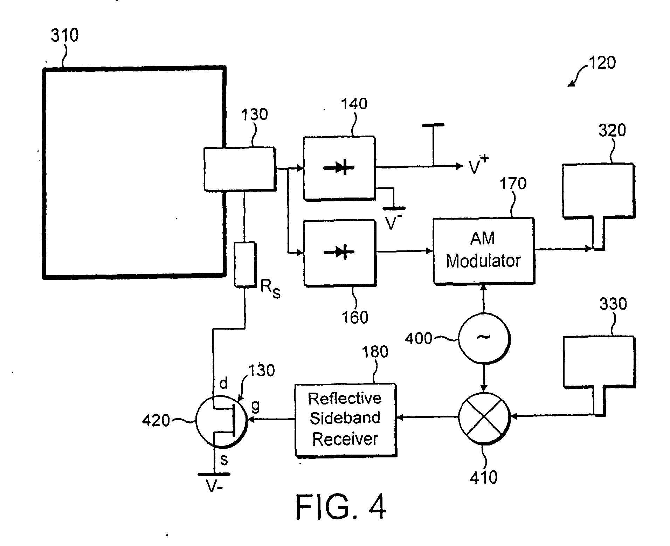

Thus, the device 120 enables the reader 20 conforming to the aforementioned standard to communicate with the non-standard smart label 110. The device 120 will now be described in further detail with reference to Figures 3 and 4.

In Figure 3, there is shown the device 120, the reader 20, the smart label 110 and the host computer system 30 indicated generally by 300. The device 120 includes an associated antenna 310 which is mutually coupled to the antenna 60 of the reader 20. These two antennae 60, 310 are operable to magnetically couple at 13.56 MHz whereat the reader 20 is sensitive to load presented by the device 120 to its associated antenna 310.

The antennae 60, 310 are loop antennae comprising one or more turns depending upon values of associated tuning capacitors used; the antennae 60, 310 provide inductive impedances at their respective terminals tuned by the tuning capacitors to nominally 13.56 MHz. The device 120 further comprises two patch antennae 320, 330 for emitting and receiving microwave radiation at 2.45 GHz respectively. The patch antennae 320, 330 are nominally of square form and are preferably fabricated as metal film electrodes in the order of 100µm thick on an insulating substrate such as alumina ceramic.

In operation, the computer system 30 communicates instructions to the reader module 50 which interprets the instructions and then modulates them onto a 13.56 MHz carrier which is coupled from the antenna 60 to the antenna 310 of the device 120 to generate a received signal therein. The received signal is rectified and translated in the device 120 and then modulated onto a 2.45 GHz carrier which is emitted as the microwave radiation 192 from the patch antenna 320. The radiation 192 is received at the smart label 110 to generate a corresponding detected signal therein which is processed and then subsequently emitted from the label 110 as the radiation 194. The patch antenna 330 receives the radiation 194 and generates a received signal which is used in the device 120 to load modulate the antenna 310. Such load modulation is detected by the reader 20 and used by the reader module 50 to generate data for relaying back to the computer system 30. Thus, the computer system 30 is capable of communicating through the standard reader 20 and the interface 120 to the non -standard smart label 110 operating at microwave frequencies, namely at 2.45 GHz.

In Figure 4, there is shown the device 120 in more detail. The antenna 310 is connected to the supply 140 which includes a network of diodes for rectifying a signal generated by the antenna 310 on receipt of 13.56 MHz magnetically coupled radiation from the reader 20 (not shown in Figure 4). The antenna 310 is also connected to the translator 160 which also includes a network of diodes for detecting an amplitude modulated signal modulated by the reader onto the 13.56 MHz radiation; the translator 160 thereby generates a demodulated signal which the transmitter 170 receives. The transmitter 170 includes an amplitude modulator which amplitude modulates a 2.45 GHz carrier signal generated by a microwave source 400 with the demodulated signal to provide a modulated microwave signal which propagates from the modulator to the patch antenna 320 wherefrom it is radiated as the radiation 192 to the smart label 110.

The patch antenna 330 is operable to receive the radiation 194 from the smart label 110 and to generate a corresponding received signal. The received signal passes from the antenna 330 to a mixer 410 whereat it is mixed with a 2.45 GHz microwave signal provided from the microwave source 400 to generate a demodulated received signal which the receiver 180 receives and amplifies to generate an amplified output signal. The device 120 also includes a field effect transistor (FET) 420 comprising a source electrode 's' connected to the supply output V-, a drain electrode 'd' connected through a resistor Rₛ to the antenna 310, and a gate electrode 'g' connected to the receiver 180 for receiving the amplified output signal therefrom.

The FET 420 is operable to provide a variable load to the antenna 310, the load varying in response to the amplified output signal applied to the gate electrode 'g'. The reader 20 is capable of detecting the variable load provided by the FET 420 by virtue of mutual magnetic coupling of the antennae 310, 60.

In some situations, the device 120 is not capable of emitting sufficiently powerful microwave radiation to provide power to the label 110 when the label 110 is at relatively greater distances from the device 120. For operation at greater distances from the device 120, the smart label 110 must therefore incorporate its own power source, for example a small button cell or solar cell. The smart label 110 preferably includes amplifiers operating in reflection mode, namely incorporating field effect transistors operating at low drain-source currents of a few microamperes and providing amplification by reflecting amplified versions of received microwave signals; reflective amplification is described in our granted patent GB 2 284 323B with regard to reflective amplification at low transistor currents.

It will be appreciated by those skilled in the art that modifications can be made to the device 120 without departing from the scope of the invention as defined by the appended claims. For example the device 120 can be modified to interface with tags or smart labels operating at microwave frequencies other than 2.45 GHz. The device 120 can be adapted to operate at any microwave frequency, microwave frequencies being defined as being included in a range of 300 MHz to 90 GHz. The microwave source 400 can, if required, be frequency locked to radiation received at the device 120 from the reader module 50; such frequency locking is achievable by incorporating a phase-locked-loop (PLL) device and associated prescalers into the device 120, the prescalers required for dividing down the signal generated by the source 400 to a suitable frequency acceptable for the PLL device.

Moreover, when the device 120, is operated at lower microwave frequencies, for example around 1 GHz, loop antennae can be alternatively employed instead of the patch antennae 320, 330. Furthermore, at higher microwave frequencies, the patch antennae can be substituted by waveguides coupled through tapered microwave horns. At very high microwave frequencies, quasi-optical microwave components can be employed for emitting radiation from and receiving radiation at the device 120.

Although the device 120 is designed to operate with conventional readers conforming to the aforementioned standard, the device 120 can be adapted to other standards which may become established in the future.

The device 120 can be adapted to interface between the reader 20 and an optical reader unit operable using laser interrogation to read a range of 2-dimensional shapes, for example bar codes, affixed or printed onto merchandise; laser interrogation in the context of the invention is defined as using interrogating radiation having a wavelength in a range of 2 :m to 150 nm. The reader unit can be designed to interpret and communicate information regarding the shapes through the device 120 to the reader 20. Moreover, whilst interfacing through the device 120 to the optical reader unit, the reader 20 can be simultaneously operable to interrogate standard 13.56 MHz smart labels or tags offered thereto. Furthermore, the reader 20 can, if required, be substituted with a low frequency 125 kHz RFID reader system and the device 120 adapted to operate at 125 kHz.

Where the reader 20 itself is substituted with an optical reader unit, for example a laser bar code reader as employed at contemporary retailing payment counters, the device 120 can be equipped with a liquid crystal display in its interface 130 for interfacing to the optical reader unit. In such a situation, the device 120 can interface between the optical reader unit and smart labels or tags functioning at an interrogation frequency such as 13.56 MHz.

Although use of the device 120 for interfacing between 13.56 MHz tag or smart label readers and remote tags or smart labels is described in the foregoing, the device 120 can be adapted to function at other frequencies, for example for interfacing between 125 kHz tag or smart label readers and 13.56 MHz tags or smart labels.

## Claims

1. A system comprising a reader (20) and either a remote tag (110) or a smart label (110), the tag (110) being used in portable items which can be personnel wearable, or the tag (110) or smart label (110) being comprised by a personal identity card for gaining authorized access to restricted premises, or the smart label (110) being designed to be permanently attachable to items to mark them,
the system being **characterized by**
a reader interfacing device (120) for providing a communication path between:
(a) the reader (20) configured to emit to and receive from the reader interfacing device (120) interrogating radiation (70) at a first radiation frequency; and
(b) the remote tag or smart label (110) configured to be interrogated by receiving from and emitting to the reader interfacing device (120) radiation (192, 194) of a second frequency, wherein
the first and second frequencies are mutually different by at least an order of magnitude, and the reader (20) is operable to communicate through the reader interfacing device (120) to the remote tag or smart label (110).

2. A system according to Claim 1, wherein the device includes power conversion means (140) for converting interrogating radiation (70) received at the device (120) from the reader (20) to generate power supply potentials for powering the reader interfacing device (120).

3. A system according to Claim 1 or 2, wherein the reader interfacing device (120) is mutually magnetically coupled to the reader (20) for receiving the interrogating radiation (70) therefrom and for providing a modulated load thereto for communicating back to the reader (20).

4. A system according to Claim 3, wherein the reader interfacing device (120) includes a first loop antenna (310) for magnetically coupling to a corresponding second loop antenna (60) of the reader (20).

5. A system according to Claim 4, wherein the reader interfacing device (120) incorporates a modulated field effect transistor (420) connected to the first loop antenna (310) for providing a variable load detectable at the reader (20).

6. A system according to any one of Claims 1 to 5, wherein the second frequency is in a range of 300 MHz to 90 GHz.

7. A system according to Claim 6, wherein the reader interfacing device (120) is configured to emit radiation to the remote tag or smart label (110) and receive radiation (192, 194) therefrom using patch antennae (320, 330).

8. A system according to Claim 6 or 7, wherein the second frequency is substantially in a range of 2 GHz to 3 GHz.

9. A system according to any one of Claims 1 to 8, including translating means (160, 190) for converting between a modulation format used by the reader (20) for modulating information onto the interrogating radiation (70) to be received by the reader interfacing device (120) and a modulation format used by the remote tag or smart label (110) for communicating therefrom to and from the reader interfacing device (120).

10. A system according to Claim 9, wherein the translating means (160) includes an amplitude demodulator for demodulating a first received signal generated in the reader interfacing device (120) in response to receiving thereat the interrogating radiation (70) from the reader (20) and thereby generating a first demodulated signal, the translating means (160) further including a modulator (170) supplied with a carrier signal at the second frequency and operable to modulate the carrier signal with the first demodulated signal to generate radiation (192) for interrogating the remote tag or smart label (110).

11. A system according to Claim 9 or 10, wherein the translating means (190) includes a demodulator (410) for heterodyne mixing a second received signal generated in response to receiving radiation (194) from the remote tag or smart label (110) with the carrier signal to generate a second demodulated signal for use in providing load modulation detectable at the reader (20).

12. A system according to Claim 11, wherein the carrier signal is generated by a microwave oscillator frequency locked to the first frequency.

13. A system according to Claim 1, wherein the reader (20) includes optical interfacing means for providing the communication path between the reader (20) and the reader interfacing device (120).

14. A system according to Claim 13, wherein the interfacing means includes a laser scanner and a liquid crystal display, the scanner being operable to scan information presented on the display to provide information exchange between the reader (20) and the reader interfacing device (120).

15. A system according to Claim 1, including optical interfacing means for providing the communication path between the device (20) and the remote tag or smart label (110).

16. A method for providing a communication path between a reader (20) and either a remote tag (110) or a smart label (110), the tag (110) being used in portable items which can be personnel wearable, or the tag (110) or smart label (110) being comprised by a personal identity card for gaining authorized access to restricted premises, or the smart label (110) being designed to be permanently attachable to items to mark them, the method being **characterized by**
a reader interfacing device receiving from and emitting to the reader (20) (120) interrogating radiation (70) at a first radiation frequency, and interrogating the remote tag or smart label (110) by the reader interfacing device (120) by emitting to and receiving from the remote tag or smart label (110) radiation (192, 194) of a second frequency,
wherein the first and second frequencies are mutually different by at least an order of magnitude, and the reader interfacing device (120) is operated to allow the reader (20) to communicate through the reader interfacing device (120) to the remote tag or smart label (110).

## Patentansprüche

1. Ein System, welches einen Leser (20) und entweder ein Remote Tag (110) oder ein Smart Label (110) umfasst, wobei der Tag (110) in portablen Gegenständen verwendet wird, welche persönlich tragbar sind, oder der Tag (110) oder Smart Label (110) von einer persönlichen Identitätskarte umfasst werden, um authorisierten Zugang zu beschränkten Räumlichkeiten zu erlangen, oder das Smart Label (110) konstruiert ist, um permanent an Gegenständen anfügbar zu sein, um diese zu markieren,
wobei das System **gekennzeichnet ist durch**
eine Leserschnittstellenvorrichtung (120) zum Bereitstellen eines Kommunikationsweges zwischen:
(a) dem Leser (20), der konfiguriert ist, um auszusenden zu und zu empfangen von der Leserschnittstellenvorrichtung (120) Abfragestrahlung (70) bei einer ersten Strahlungsfrequenz und
(b) dem Remote Tag oder Smart Label (110), die konfiguriert sind, um abgefragt zu werden **durch** Empfangen von und Ausstrahlen zu der Leserschnittstellenvorrichtung (120) Strahlung (192, 194) einer zweiten Frequenz, wobei
die ersten und zweiten Frequenzen gegenseitig **durch** mindestens eine Größenordnung unterschiedlich sind, und der Leser (20) betreibbar ist, um **durch** die Leserschnittstellenvorrichtung (120) zu dem Remote Tag oder dem Smart Label (110) zu kommunizieren.

2. System nach Anspruch 1, wobei die Vorrichtung Energieumwandlungseinrichtungen (140) zum Umwandeln der Abfragestrahlung (70), welche bei der Vorrichtung (120) von dem Leser (20) empfangen ist, beinhaltet, um Energieversorgungspotentiale zum Betreiben der Leserschnittstellenvorrichtung (120) zu erzeugen.

3. System nach Anspruch 1 oder 2, wobei die Leserschnittstellenvorrichtung (120) gegenseitig magnetisch mit dem Leser (20) gekoppelt ist zum Empfangen der Abfragestrahlung (70) und zum Bereitstellen einer modulierten Ladung dazu zum Rückkommunizieren zu dem Leser (20).

4. System nach Anspruch 3, wobei die Leserschnittstellenvorrichtung (120) eine erste Ringantenne (310) zur magnetischen Kopplung mit einer entsprechenden zweiten Ringantenne (60) des Lesers (20) beinhaltet.

5. System nach Anspruch 4, wobei die Leserschnittstellenvorrichtung (120) einen modulierten Feldeffekttransistor (420) enthält, der mit der ersten Ringantenne (310) verbunden ist zum Bereitstellen einer variablen Ladung, die detektierbar an dem Leser (20) ist.

6. System nach einem der Ansprüche 1 bis 5, wobei die zweite Frequenz in einem Bereich von 300 M Hz bis 90 GHz ist.

7. System nach Anspruch 6, wobei die Leserschnittstellenvorrichtung (120) konfiguriert ist, um Strahlung zu dem Remote Tag oder Smart Label (110) auszustrahlen und Strahlung (192, 194) unter Verwenden einer Patchantenne (320, 330) davon zu empfangen.

8. System nach Anspruch 6 oder 7, wobei die zweite Frequenz im Wesentlichen in einem Bereich von 2GHz bis 3 GHz ist.

9. System nach einem der Ansprüche 1 bis 8, welches Übersetzungseinrichtungen (160, 190) beinhaltet zum Umwandeln zwischen einem Modulationsformat, das durch den Leser (20) zum Modulieren von Informationen auf die Abfragestrahlung (70), die durch die Leserschnittstellenvorrichtung (120) zu empfangen ist, und einem Modulationsformat, das durch den Remote Tag oder Smart Label (110) zum Kommunizieren von diesem zu und von der Leserschnittstellenvorrichtung (120) verwendet ist.

10. System nach Anspruch 9, wobei die Übersetzungseinrichtungen (160) einen Amplitudendemodulator zum Demodulieren eines ersten empfangenen Signals, das in der Leserschnittstellenvorrichtung (120) in Antwort auf das Empfangen dort die Abfragestrahlung (70) von dem Leser (20) erzeugt wird, und **dadurch** Erzeugen eines ersten demodulierten Signales beinhaltet, wobei die Übersetzungseinrichtungen (160) desweiteren einen Modulator (170) beinhalten, der mit einem Trägersignal bei der zweiten Frequenz versorgt ist und betreibbar ist, um das Trägersignal mit dem ersten demodulierten Signal zu modulieren, um Strahlung (192) zum Abfragen des Remote Tags oder Smart Labels (110) zu erzeugen.

11. System nach Anspruch 9 oder 10, wobei die Übersetzungseinrichtungen (190) einen Demodulator (410), zum Überlagerungsmischen eines zweiten empfangenen Signals, das in Antwort auf die empfangene Strahlung (194) von dem Remote Tag oder Smart Label (110) mit dem Trägersignal erzeugt ist, beinhalten, um ein zweites demoduliertes Signal zum Verwenden beim Bereitstellen von Ladungsmodulation, die an dem Leser (20) detektierbar ist, zu erzeugen.

12. System nach Anspruch 11, wobei das Trägersignal durch eine Mikrowellenschwingungsfrequenz erzeugt ist, die zu der ersten Frequenz geschlossen ist.

13. System nach Anspruch 1, wobei der Leser (20) optische Schnittstelleneinrichtungen zum Bereitstellen des Kommunikationsweges zwischen dem Leser (20) und der Leserschnittstellenvorrichtung (120) beinhaltet.

14. System nach Anspruch 13, wobei die Schnittstelleneinrichtungen einen Laserscanner und eine Flüssigkristallanzeige beinhalten, wobei der Scanner betreibbar ist, um Information zu scannen, die auf der Anzeige vorhanden sind, um Informationsaustausch zwischen dem Leser (20) und der Leserschnittstellenvorrichtung (120) bereitzustellen.

15. System nach Anspruch 1, welches optische Schnittstelleneinrichtungen zum Bereitstellen des Kommunikationsweges zwischen der Vorrichtung (20) und dem Remote Tag oder Smart Label (110) beinhalten.

16. Ein Verfahren zum Bereitstellen eines Kommunikationsweges zwischen einem Leser (20) und entweder einem Remote Tag (110) oder einem Smart Label (110), wobei der Tag (110) in portablen Gegenständen verwendet wird, welche persönlich tragbar sind, oder das Tag (110) oder Smart Label (110) durch eine persönliche Identitätskarte umfasst sind, um authorisierten Zugang zu beschränkten Räumlichkeiten zu erlangen oder der Smart Label (110) konstruiert ist, um permanent an Gegenstände anfügbar zu sein, welche diesen markieren,
wobei das Verfahren **gekennzeichnet ist durch**
eine Leserschnittstellenvorrichtung (120), welche Abfragestrahlung (70) von dem Leser (20) empfängt und zu diesem ausstrahlt bei einer ersten Strahlungsfrequenz, und Abfragen des Remote Tags oder Smart Labels (110) **durch** die Leserschnittstellenvorrichtung (120) **durch** Ausstrahlen zu und Empfangen von dem Remote Tag oder Smart Label (110) Strahlung (192, 194) einer zweiten Frequenz, wobei die ersten und zweiten Frequenzen gegenseitig mindestens eine Größenordnung unterschiedlich sind, und die Leserschnittstellenvorrichtung (120) betrieben wird, um dem Leser (20) zu ermöglichen, **durch** die Leserschnittstellenvorrichtung (120) zu dem Remote Tag oder Smart Label (110) zu kommunizieren.

## Revendications

1. Système comprenant un lecteur (20) et soit une balise à distance (110) soit une étiquette intelligente (110), la balise (110) étant utilisé dans des articles portables qui peuvent être portables par le personnel, ou la balise (110) ou l'étiquette intelligente (110) étant comprise dans une carte d'identité personnelle pour obtenir un accès autorisé à des lieux réglementés, ou l'étiquette intelligente (110) étant conçue pour pouvoir être attachée en permanence à des articles pour les marquer,
le système étant **caractérisé par**
un dispositif d'interface avec le lecteur (120) afin de fournir un trajet de communication entre :
(a) le lecteur (20) configuré pour émettre vers et recevoir du dispositif d'interface avec le lecteur (120) un rayonnement d'interrogation (70) à une première fréquence de rayonnement ; et
(b) la balise à distance ou l'étiquette intelligente (110) configurée pour être interrogée en recevant de et émettant vers le dispositif d'interface avec l'utilisateur (120) un rayonnement (192, 194) d'une seconde fréquence, où
les première et seconde fréquences sont mutuellement différentes d'au moins un ordre de grandeur, et le lecteur (20) est utilisable pour communiquer à travers le dispositif d'interface avec le lecteur (120) vers la balise à distance ou l'étiquette intelligente (110).

2. Système selon la revendication 1, dans lequel le dispositif comprend un moyen de conversion de puissance (140) permettant de convertir un rayonnement d'interrogation (70) reçu au niveau du dispositif (120) depuis le lecteur (20) pour générer des potentiels d'alimentation en énergie afin d'alimenter le dispositif d'interface avec le lecteur (120).

3. Système selon la revendication 1 ou 2, dans lequel le dispositif d'interface avec le lecteur (120) est mutuellement magnétiquement couplé au lecteur (20) afin de recevoir le rayonnement d'interrogation (70) depuis ce dernier et fournir une charge modulée à ce dernier afin de communiquer en retour vers le lecteur (20).

4. Système selon la revendication 3, dans lequel le dispositif d'interface avec le lecteur (120) comprend une première antenne cadre (310) pour un couplage magnétique à une seconde antenne cadre (60) correspondante du lecteur (20) .

5. Système selon la revendication 4, dans lequel le dispositif d'interface avec le lecteur (120) incorpore un transistor à effet de champ modulé (420) connecté à la première antenne cadre (310) afin de fournir une charge variable détectable au niveau du lecteur (20).

6. Système selon l'une quelconque des revendications 1 à 5, dans lequel la seconde fréquence est dans une plage de 300 MHz à 90 GHz.

7. Système selon la revendication 6, dans lequel le dispositif d'interface avec le lecteur (120) est configuré pour émettre un rayonnement vers la balise à distance ou l'étiquette intelligente (110) et recevoir un rayonnement (192, 194) depuis ces derniers en utilisant des antennes à plaque (320, 330).

8. Système selon la revendication 6 ou 7, dans lequel la seconde fréquence est sensiblement dans une plage de 2 GHz à 3 GHz.

9. Système selon l'une quelconque des revendications 1 à 8, comprenant des moyens de translation (160, 190) permettant d'effectuer la conversion entre un format de modulation utilisé par le lecteur (20) pour moduler les informations sur le rayonnement d'interrogation (70) devant être reçue par le dispositif d'interface avec l'utilisateur (120) et un format de modulation utilisé par la balise à distance ou l'étiquette intelligente (110) pour communiquer depuis ce dernier vers et depuis le dispositif d'interface avec le lecteur (120).

10. Système selon la revendication 9, dans lequel le moyen de translation (160) comprend un démodulateur d'amplitude permettant de démoduler un premier signal reçu généré dans le dispositif d'interface avec le lecteur (120) en réponse à la réception à ce dernier du rayonnement d'interrogation (70) depuis le lecteur (20) et générer ainsi un premier signal démodulé, le moyen de translation (160) comprenant en outre un modulateur (170) alimenté avec un signal porteur à la seconde fréquence et utilisable pour moduler le signal porteur avec le premier signal démodulé pour générer un rayonnement (192) afin d'interroger la balise à distance ou l'étiquette intelligente (110).

11. Système selon la revendication 9 ou 10, dans lequel le moyen de translation (190) comprend un démodulateur (410) permettant un mélange hétérodyne d'un second signal reçu généré en réponse à la réception d'un rayonnement (194) depuis la balise à distance ou l'étiquette intelligente (110) avec le signal porteur afin de générer un second signal démodulé à utiliser pour fournir une modulation de charge détectable au niveau du lecteur (20).

12. Système selon la revendication 11, dans lequel le signal porteur est généré par une fréquence d'oscillateur hyperfréquence verrouillée à la première fréquence.

13. Système selon la revendication 1, dans lequel le lecteur (20) comprend un moyen d'interface optique permettant de fournir le trajet de communication entre le lecteur (20) et le dispositif d'interface avec le lecteur (120).

14. Système selon la revendication 13, dans lequel le moyen d'interface comprend un scanner au laser et un afficheur à cristaux liquides, le scanner étant utilisable pour scanner des informations présentées sur l'afficheur pour fournir un échange d'informations entre le lecteur (20) et le dispositif d'interface avec le lecteur (120).

15. Système selon la revendication 1, comprenant un moyen d'interface optique permettant de fournir le trajet de communication entre le dispositif (20) et la balise à distance ou l'étiquette intelligente (110).

16. Procédé consistant à fournir un trajet de communication entre un lecteur (20) et soit une balise à distance (110) soit une étiquette intelligente (110), l'étiquette (110) étant utilisée dans des articles portables qui peuvent être portables par le personnel, ou la balise (110) ou étiquette intelligente (110) étant comprise par une carte d'identité personnelle pour obtenir un accès autorisé à des lieux réglementés, ou l'étiquette intelligente (110) étant conçue pour pouvoir être attachée en permanence à des articles pour les marquer,
le procédé étant **caractérisé par**
un dispositif d'interface avec le lecteur (120) recevant depuis et émettant vers le lecteur (20) un rayonnement d'interrogation (70) à une première fréquence de rayonnement, et
l'interrogation de la balise à distance ou de l'étiquette intelligente (110) par le dispositif d'interface avec le lecteur (120) en émettant vers et recevant depuis la balise à distance ou l'étiquette intelligente (110) un rayonnement (192, 194) d'une seconde fréquence,
dans lequel les première et seconde fréquences sont mutuellement différentes d'au moins un ordre de grandeur, et le dispositif d'interface avec le lecteur (120) est utilisé pour permettre au lecteur (20) de communiquer via le dispositif d'interface avec le lecteur (120) vers la balise à distance ou l'étiquette intelligente (110).
